# EUROPEAN PATENT SPECIFICATION

(11) **EP 1 490 602 B1**
(45) Date of publication and mention of the grant of the patent: **20.02.2008**
(21) Application number: 03713663.7
(22) Date of filing: 26.02.2003
(51) Int. Cl.: F16B 33/00, F16B 33/06, F16B 37/12

(54) **PLATED FASTENER INSERTS AND METHOD OF PRODUCING THE SAME**
PLATTIERTE BEFESTIGUNGSEINSÄTZE UND VERFAHREN ZUR HERSTELLUNG DERSELBEN
DOUILLE D'ANCRAGE PLAQUEE ET PROCEDE DE PRODUCTION CORRESPONDANT

(30) Priority: 04.04.2002 US 116454
(43) Date of publication of application: 29.12.2004
(73) Proprietor: Newfrey LLC, Newark, Delaware 19711 (US)
(72) Inventor: LUTKUS, William, J., Watertown, CT 06795 (US)
(74) Representative: Haar, Lucas Heinz Jörn
(86) International application number: PCT/US2003/005657
(87) International publication number: WO 2003/085275

(56) References cited:
- WO-A-01/00903
- US-B1- 6 224 311

## Description

### BACKGROUND OF THE INVENTION

The present invention relates to coated fastener inserts and a method for plating such fastener inserts and, more particularly, to plating fastener inserts to prevent galvanic corrosion in fastener assemblies.

Fastener assemblies come in a variety of shapes, sizes, designs and materials. Many fastener assemblies include not only a fastener such as a bolt, pin or screw, but also will include a fastener insert to be positioned within a tapped hole.

The type of fastener insert needed for a particular fastening operation will in large part dictated the type of fastener to be employed. While the present invention is applicable to various fastener assemblies wherein galvanic corrosion is a potential problem, the invention will hereinafter be described with reference to fastener assemblies with metallic helically coiled wire fastener inserts. By way of non-limiting example, certain metallic helically coiled wire inserts useful in association with a threaded fastener are described in U.S. Patent No. 2,672,070, entitled "Wire Coil Screw Thread Insert for Molded Material" and U.S. Patent No. 6,224,311 B1 entitled "Coated Fastener Inserts and Method of Producing the Same".

Generally speaking, tapped threads are strengthened due to the inherent flexibility of helically coiled wire inserts since the insert provides a more balanced distribution of dynamic and static loads throughout the length of thread engagement. This is especially important when the substrate including tapped holes is formed from a relatively soft metal, i.e., aluminum and magnesium. The inherent flexibility also compensates for variation in lead and angle error.

Additionally, no stress is initially introduced to the substrate because the helically coiled insert does not exhibit staking, locking or swaging and does not require keying in place. Helically coiled wire inserts allow for the use of smaller bosses, flanges and fasteners than other inserts, thus presenting a cost savings, particularly for high volume applications.

While such helically coiled wire inserts are generally useful as anchoring mechanisms for threaded fasteners in order to be used in high strength applications, such inserts must be formed from high strength metals such as 302/304 stainless steel. The use of stainless steel inserts in association with substrates or fasteners formed from other alloys leads to certain perceived problems such as the possibility of galvanic corrosion occurring over time. By the phrase "galvanic corrosion" it is meant the electrochemical corrosion resulting from the current caused in a galvanic cell between two dissimilar metals in an electrolyte because of the difference in potential (emf) of the two metals.

Stainless steel fastener inserts have been used in conjunction with zinc chromate primer which is applied to the tapped hole prior to installing the insert in an effort to prevent galvanic corrosion. However, the application of the zinc chromate primer requires strict quantitative controls and is considered labor intensive. The application of the primer is very subjective based on the installer. In the case of fastener inserts for threaded fasteners, the application of too much primer can result in excessive high torque resulting from primer which will eventually harden beneath the cords of the locking coils, restricting their movement. This could result in false clamp load readings and insufficiently torqued bolts. In addition, the installation tools require frequent cleaning to prevent the build up of the primer on the mandrels of the tool, which is undesirable. The application of too little of the zinc chromate primer leads to other problems such as inadequate corrosion protection.

It is further known from WO 01/00903 A an arrangement for decreasing galvanic corrosion between metal components, which comprises at least a first component in which a first metal is a part, and at least a second component in which a second metal is a part, whereby the first metal has a higher normal-electrode potential than the second metal, and after mounting the first component is in electrical contact with the second component, wherein the first component is coated with a substantially continuous surface layer which is adjusted to give the second component an insignificant galvanic corrosion velocity. By the very slow kinetic corrosion velocity, the surface layer, i.e. the cathode, reassures that the galvanic corrosion attacks on the second component, i.e. the anode, only remains insignificant during a long period of time with regard to practical purposes.

In view of the foregoing, the present invention relates to a method for preventing galvanic corrosion in fastener assemblies employing a metallic fastener insert and a metallic fastener for use in a tapped hole of a metallic substrate, said method comprising the steps of:
a) providing a fastener and a fastener insert for retaining the fastener within said tapped hole;
b) plating said fastener insert with a metal alloy having an emf potential of ± 0.25V as compared to that of said substrate; and
c) adjoining the fastener and platted fastener insert within said tapped hole.

As a result of plating the fastener insert, it is a primary object of the present invention to extend the useful life of fastener applications by preventing galvanic corrosion within a fastener assembly.
Thus, the present invention also relates to a fastener assembly including plated metallic fastener insert, a metallic fastener and a metallic substrate including a tapped hole for receiving said fastener insert, at least one of said insert, fastener and substrate being formed from a metal alloy which is different from the metal of the other of said insert, fastener or substrate, said insert comprising a substantially cylindrical body of helically wound wire including a plurality of convolutions wherein the outer surface is plated with a metal alloy having an emf potential of ± 0.25V as compared to that of said substrate to reduce galvanic corrosion in the fastener assembly.

Further areas of applicability of the present invention will become apparent from the detailed description provided hereinafter. It should be understood that the detailed description and specific examples, while indicating the preferred embodiment of the invention, are intended for purposes of illustration only and are not intended to limit the scope of the invention.

### BRIEF DESCRIPTION OF THE DRAWINGS

The present invention will become more fully understood from the detailed description and the accompanying drawings, wherein:
Figure 1 is a blown apart perspective view of a fastener assembly including a helically wound insert;
Figure 2 is an assembly view in cross-section of the fastener assembly of Figure 1;

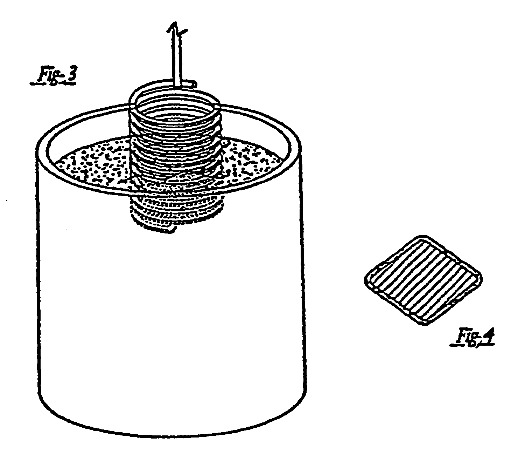

Figure 3 is a perspective view illustrating the process of electroplating a helically wound insert; and
Figure 4 is a cross-sectional view of a convolution taken along line 4-4 of Figure 1 of a plated fastener insert.

### DETAILED DESCRIPTION OF THE PREFERRED EMBODIMENTS

The following description of the preferred embodiment(s) is merely exemplary in nature and is in no way intended to limit the invention, its application, or uses.

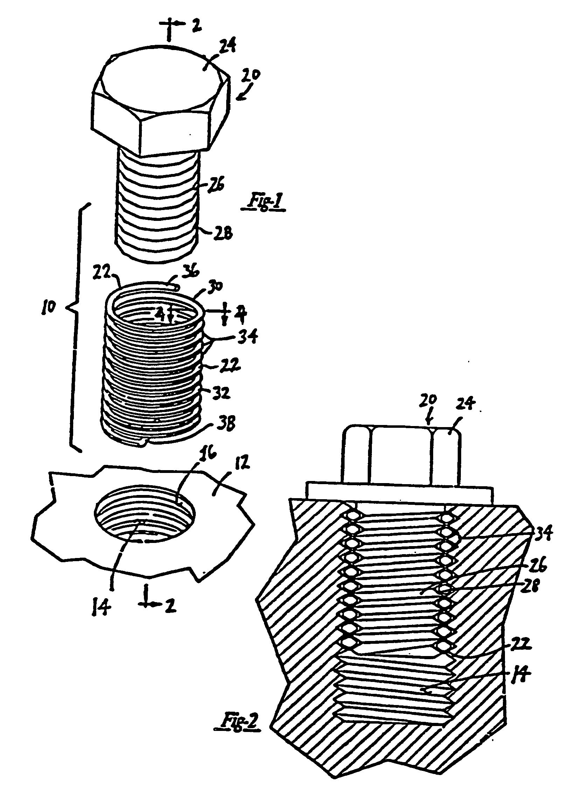

Referring to Figure 1, there is shown a fastener assembly 10 for use in association with a substrate 12 having one or more tapped holes 14 including inwardly projecting threads 16. Substrates requiring fastener inserts are generally cast or extruded from a relatively soft metal such as an aluminum or magnesium alloy and can be part of any one of a number of end products such as auto body or aircraft panels and engine blocks, by way of non-limiting example. The fastener assembly 10 includes a fastener 20 and fastener insert 22 insertable within the tapped hole 14.

The fastener 20 generally includes a head 24 and a shank 26 having radially outwardly projecting threads 28. The fastener insert 22 may be of any form capable of retaining the fastener within a tapped hole, but preferably is in the form of a helically wound wire 30 including a body 32 having a plurality of convolutions 34 disposed between first and second ends, 36 and 38, respectively. At least one of the ends may be provided with a driving tang or notch for tangless embodiments for assistance in the installation or removal process.

Preferably, the fastener inserts 22 are larger in diameter, before installation than the tapped holes 14 such that upon installation they become firmly secured within the taped holes, as shown most clearly in Figure 2. Further, when the helically wound inserts are disposed within the tapped holes, the coils provide permanent convolution 60° internal screw threads which accommodate virtually any standard threaded bolt or screw.

After forming the fastener insert to the desired shape, the insert is optionally cleaned and/or otherwise prepared for plating.

In this regard, it is preferred that the fastener inserts be free of contaminants such as oil, grease, metal shavings, etc. since contaminants may cause poor adhesion of the plating to the fastener insert. Thus, if necessary, the fastener inserts be cleaned, i.e., degreased prior to plating using a chlorinated or fluorinated solvent, detergents or a high temperature burnout process wherein the part is exposed to temperatures roughly between 400 to 425°C for ten to twenty minutes to ensure that any petroleum based contaminants are fully carbonized.

In addition to cleaning the surface, the fastener inserts may be immersed in an acidic deoxidizing composition including inhibitors to suppress hydrogen evolution.

Once the inserts are prepared for plating, the inserts are electroplated employing known electrochemical plating techniques. For example, for fastener inserts to be disposed in an aluminum alloy substrate, an electroplating bath including a complimentary aluminum composition is provided. Such electroplating bath compositions can be purchased commercially from a variety of sources such as AlumiPlate, Inc. of Minneapolis, Minnesota.

A preferred plating process including the steps of aqueous cleaning, acid deoxidation and subsequent plating is described in U.S. Patent No. 4,417,954. After cleaning and deoxidation, an appropriate aluminum plating composition is prepared in a non-aqueous, apriotic electrolyte wherein the inserts are precluded from exposure to free hydrogen. Under a preferred embodiment, the plating employed will have an emf potential which is ±0.25v as compared to the emf potential of the substrate. The plating composition is applied to a relatively uniform average dry thickness of between about 5,08 µm to about 12,7 µm (about 0.0002 to about 0.0005 inches) and, more preferably, between about 7,62 µm to about 10,16 µm (about 0.0003 to about 0.0004 inches). A thinner plating may not be sufficiently effective at preventing galvanic corrosion in a fastener assembly and thicker platings can interfere with the installation tooling.

After plating but prior to installation within a tapped hole, for example, the plated fastener insert is optionally coated with a fluoropolymer or chromate composition by dip spraying or air spray techniques.

Fastener inserts prepared in the foregoing manner were analyzed utilizing a salt spray test. Aluminum plated fastener inserts were installed into tapped holes in aluminum blocks and subjected to salt spray pursuant to ASTM B 117-97 for a period of 500 hours. After 500 hours, the aluminum plated fastener inserts were removed and metallographically inspected. No corrosion was observed on the aluminum block in either the exposed surface or the exposed threads.

After sectioning, no corrosion was observed between the aluminum block thread and the aluminum plated inserts.

## Claims

1. A fastener assembly (10) including a plated metallic fastener insert (22), a metallic fastener (20) and a metallic substrate (12) including a tapped hole (14) for receiving said fastener insert (22), at least one of said insert (22), fastener (20) and substrate (12) being formed from a metal alloy which is different from the metal of the other of said insert, fastener or substrate, said insert comprising a substantially cylindrical body (32) of helically wound wire (30) including a plurality of convolutions (34), **characterized in that** the outer surface of said body (32) is plated with a metal alloy having an emf potential of ± 0.25V as compared to that of said substrate (12) to reduce galvanic corrosion in the fastener assembly (10).

2. The assembly of Claim 1 wherein said plating has an average dry thickness of between about 5,08 µm to about 12,7 µm.

3. The assembly of Claim 1 wherein said plating has an average dry thickness of between about 7,62 µm to about 10,16 µm.

4. The assembly of Claim 1 wherein said insert body (32) is formed from stainless steel.

5. The assembly of Claim 1 wherein said plating contains aluminum.

6. The assembly of Claim 1 wherein said coils of said insert (22) provide 60° internal screw threads upon insertion within said tapped hole (14).

7. A method for preventing galvanic corrosion in fastener assemblies (10) employing a metallic fastener insert (22) and a metallic fastener (20) for use in a tapped hole (14) of a metallic substrate (12), at least fastener (20) for use in a tapped hole (14) of a metallic substrate (12), at least one of said insert (22), fastener (20) and substrate (12) being formed from a metal alloy which is different from the metal of the other of said insert, fastener or substrate, said insert comprising a substantially cylindrical body (32) of helically wound wire (30) including a plurality of convolutions (34), said method comprising the steps of:
a) providing a fastener (20) and a fastener insert (22) for retaining the fastener (20) within said tapped hole (14);
b) providing said fastener insert with a layer for preventing galvanic corrosion ; and
c) adjoining the fastener (20) and coated fastener insert (22) within said tapped hole (14),
**characterized by** plating said fastener insert (22) with a metal alloy having an emf potential of ± 0.25V as compared to that of said substrate (12).

8. The method of Claim 7 wherein said plating has an average dry thickness of between about 5,08 µm (0.0002 inches) to about 12,7 µm (0.0005 inches).

9. The method of Claim 7 wherein said insert (22) is formed from stainless steel.

10. The method of Claim 7 wherein said plating contains aluminum.

11. The method of Claim 7 wherein said fastener insert (22) includes a body (32) in the form of a helically wound wire (30) having a plurality of convolutions (34).

12. The method of Claim 11 wherein said coils of said insert (22) provide 60° internal screw threads upon insertion within said tapped hole (14).

## Patentansprüche

1. Befestigungsvorrichtung (10) mit einem metallbeschichteten metallischen Befestigungseinsatz (22), einem metallischen Befestigungselement (20) und einem metallischen Trägermaterial (12), das eine Gewindebohrung (14) zur Aufnahme des Befestigungseinsatzes (22) aufweist, wobei wenigstens eines der Bauteile Einsatz (22), Befestigungselement (20) und Trägermaterial (12) aus einer Metalllegierung gebildet ist, die sich von dem Metall des jeweils anderen Bauteils, also Einsatz, Befestigungselement oder Trägermaterial, unterscheidet, der Einsatz einen im wesentlichen zylindrischen Körper (32) aus helixförmig gewickeltem Draht (30) mit einer Vielzahl von Windungen (34) umfasst, **dadurch gekennzeichnet, dass** die Außenfläche des Körpers (32) mit einer Metalllegierung beschichtet ist, die im Vergleich zu dem Trägermaterial (12) ein EMK-Potential von ±0,25 V aufweist, um galvanische Korrosion in der Befestigungsvorrichtung (10) zu reduzieren.

2. Vorrichtung nach Anspruch 1, wobei die Metallbeschichtung im trockenen Zustand eine Dicke von durchschnittlich etwa 5,08 µm bis etwa 12,7 µm aufweist.

3. Vorrichtung nach Anspruch 1, wobei die Metallbeschichtung im trockenen Zustand eine Dicke von durchschnittlich etwa 7,62 µm bis etwa 10,16 µm aufweist.

4. Vorrichtung nach Anspruch 1, wobei der Körper (32) des Einsatzes aus rostfreiem Stahl gebildet ist.

5. Vorrichtung nach Anspruch 1, wobei die Metallbeschichtung Aluminium enthält.

6. Vorrichtung nach Anspruch 1, wobei die Windungen des Einsatzes (22) nach dem Einbau in die Gewindebohrung (14) einen Innengewindegang von 60° bilden.

7. Verfahren zur Vermeidung galvanischer Korrosion bei Befestigungsvorrichtungen (10) mit einem metallischen Befestigungseinsatz (22) und einem metallischen Befestigungselement (20) für den Einsatz in einer Gewindebohrung (14) eines metallischen Trägermaterials (12), wobei wenigstens eines der Bauteile Einsatz (22), Befestigungselement (20) und Trägermaterial (12) aus einer Metalllegierung gebildet ist, die sich von dem Metall des jeweils anderen Bauteils, also Einsatz, Befestigungselement oder Trägermaterial, unterscheidet, der Einsatz einen im wesentlichen zylindrischen Körper (32) aus helixförmig gewickeltem Draht (30) mit einer Vielzahl von Windungen (34) umfasst, wobei das Verfahren folgende Schritte umfasst:
a) Bereitstellen eines Befestigungselementes (20) und eines Befestigungseinsatzes (22), um das Befestigungselement (20) in der Gewindebohrung (14) zu halten;
b) Auftragen einer Schicht auf den Befestigungseinsatz zur Vermeidung galvanischer Korrosion; und
c) Zusammenfügen von Befestigungselement (20) und beschichtetem Befestigungseinsatz (22) in der Gewindebohrung (14),
**dadurch gekennzeichnet, dass** der Befestigungseinsatz (22) mit einer Metalllegierung beschichtet wird, die im Vergleich zu dem Trägermaterial (12) ein EMK-Potential von ±0,25 V aufweist.

8. Verfahren nach Anspruch 7, wobei die Metallbeschichtung im trockenen Zustand eine Dicke von durchschnittlich etwa 5,08 µm (0,0002 Zoll) bis etwa 12,7 µm (0,0005 Zoll) aufweist.

9. Verfahren nach Anspruch 7, wobei der Einsatz (22) aus rostfreiem Stahl gebildet ist.

10. Verfahren nach Anspruch 7, wobei die Metallbeschichtung Aluminium enthält.

11. Verfahren nach Anspruch 7, wobei der Befestigungseinsatz (22) einen Körper (32) in Form eines helixförmig gewickelten Drahtes (30) mit einer Vielzahl von Windungen (34) umfasst.

12. Verfahren nach Anspruch 11, wobei die Windungen des Einsatzes (22) nach dem Einbau in die Gewindebohrung (14) einen Innengewindegang von 60° bilden.

## Revendications

1. Dispositif de fixation (10) incluant un insert de fixation métallique plaqué (22), une pièce de fixation métallique (20) et un substrat métallique (12) incluant un trou taraudé (14) destiné à recevoir ledit insert (22), au moins un desdits insert (22), pièce de fixation (20) et substrat (12) étant formé d'un alliage métallique qui est différent du métal de l'autre desdits insert, pièce de fixation ou substrat, ledit insert comprenant un corps sensiblement cylindrique (32) en fil bobiné en hélice (30) incluant une pluralité de spires (34), **caractérisé en ce que** la surface extérieure dudit corps (32) est plaquée avec un alliage métallique ayant un potentiel électrochimique de ± 0,25 V en comparaison de celui dudit substrat (12) afin de réduire la corrosion galvanique du dispositif de fixation (10).

2. Dispositif selon la revendication 1 dans lequel ledit revêtement a une épaisseur moyenne à sec comprise entre environ 5,08 µm et environ 12,7 µm.

3. Dispositif selon la revendication 1 dans lequel ledit revêtement a une épaisseur moyenne à sec comprise entre environ 7,62 µm et environ 10,16 µm.

4. Dispositif selon la revendication 1, dans lequel ledit corps d'insert (32) est formé d'acier inoxydable.

5. Dispositif selon la revendication 1, dans lequel ledit revêtement contient de l'aluminium.

6. Dispositif selon la revendication 1, dans lequel lesdites spires dudit insert (22) constituent des filets de vis intérieurs à 60° lors de l'insertion dans ledit trou taraudé (14).

7. Procédé pour empêcher la corrosion galvanique dans des dispositifs de fixation (10) utilisant un insert de fixation métallique (22) et une pièce de fixation métallique (20) destinés à être utilisés dans un trou taraudé (14) d'un substrat métallique (12), au moins un desdits insert (22), pièce de fixation (20) et substrat (12) étant formée d'un alliage métallique différent du métal de l'autre desdits inserts, pièce de fixation ou substrat, ledit insert comprenant un corps sensiblement cylindrique (32) en fil bobiné en hélice (30) incluant une pluralité de spires (34), ledit procédé comprenant les étapes consistant à :
a) disposer une pièce de fixation (20) et un insert de fixation (22) destiné à retenir la pièce de fixation (20) à l'intérieur dudit trou taraudé (14) ;
b) revêtir ledit insert de fixation d'une couche destinée à empêcher la corrosion galvanique ; et
c) ajointer la pièce de fixation (20) et l'insert de fixation plaqué (22) à l'intérieur dudit trou taraudé (14),
**caractérisé en ce que** ladite pièce de fixation (22) est plaquée avec un alliage métallique ayant un potentiel électrochimique de ± 0,25 V en comparaison de celui dudit substrat (12).

8. Procédé selon la revendication 7 dans lequel ledit revêtement a une épaisseur moyenne à sec comprise entre environ 5,08 µm (0,0002 pouce) et environ 12,7 µm (0,0005 pouce).

9. Procédé selon la revendication 7 dans lequel ledit insert (22) est formée en acier inoxydable.

10. Procédé selon la revendication 7 dans lequel ledit revêtement contient de l'aluminium.

11. Procédé selon la revendication 7 dans lequel ledit insert de fixation (22) inclut un corps (32) sous forme de fil bobiné en hélice (30) ayant une pluralité de spires (34).

12. Procédé selon la revendication 11 dans lequel lesdites spires dudit insert (22) constituent des filets de vis intérieurs à 60° lors de l'insertion dans ledit trou taraudé (14).
